# EUROPEAN PATENT SPECIFICATION

(11) **EP 3 036 304 B1**
(45) Date of publication and mention of the grant of the patent: **08.01.2020**
(21) Application number: 14837224.6
(22) Date of filing: 21.08.2014
(51) Int. Cl.: C09K 8/60, C09K 8/62, C09K 8/03

(54) **AQUEOUS DOWNHOLE FLUIDS HAVING CHARGED NANO-PARTICLES AND POLYMERS**
WÄSSRIGE BOHRLOCHFLÜSSIGKEITEN MIT GELADENEN NANOPARTIKELN UND POLYMEREN
FLUIDES AQUEUX DE FOND COMPORTANT DES NANOPARTICULES ET DES POLYMÈRES CHARGÉS

(30) Priority: 22.08.2013 US 201361868816 P; 20.08.2014 US 201414464395
(43) Date of publication of application: 29.06.2016
(73) Proprietor: Baker Hughes, a GE company, LLC, Houston, TX 77073 (US)
(72) Inventor: DEBORD, Saet, B., Katy, TX 77450 (US); TANIFUM, Christabel, Katy, TX 77449 (US)
(74) Representative: BRP Renaud & Partner mbB Rechtsanwälte Patentanwälte Steuerberater
(86) International application number: PCT/US2014/052135
(87) International publication number: WO 2015/027084

(56) References cited:
- WO-A1-2012/071462
- WO-A1-2013/012704
- WO-A1-2013/116227
- US-A1- 2004 023 816
- US-A1- 2011 000 672
- US-A1- 2012 214 923
- US-A1- 2012 245 058
- US-A1- 2013 153 233
- ZOLFAGHARI, REIHANEH ET AL.: 'Preparation and characterization of nanocomposite hydrogels based on polyacrylamide for enhanced oil recovery applications.' JOURNAL OF APPLIED POLYMER SCIENCE vol. 100, no. 3, 2006, pages 2096 - 210, XP055021714

## Description

### TECHNICAL FIELD

The present invention relates to fluids and methods of using aqueous downhole fluids, such as fracturing fluids or injection fluids, having certain polymers and charged clay nanoparticles therein, and more specifically relates to the crosslinking of the polymers within the aqueous downhole fluid by an effective amount of the charged clay nanoparticles.

### BACKGROUND

In the exploration of oil and gas, viscosified fluids are used in various aqueous injection fluids for injection operations and fracturing fluids for fracturing operations.

The development of suitable fracturing fluids is a complex art for use with hydraulic fracturing to improve the recovery of hydrocarbons from the formation. Once hydraulic fracturing begins, and the crack or cracks are made, high permeability proppant, relative to the formation permeability, is pumped into the fracture to prop open the crack. When the applied pump rates and pressures are reduced or removed from the formation, the crack or fracture cannot close or heal completely because the high permeability proppant keeps the crack open. The propped crack or fracture provides a high permeability path connecting the producing wellbore to a larger formation area to enhance the production of hydrocarbons.

The fracturing fluids must simultaneously meet a number of conditions. For example, they must be stable at high temperatures and/or high pump rates and shear rates that can cause the fluids to degrade and prematurely settle out the proppant before the fracturing operation is complete. Various fluids have been developed, but most commercially used fracturing fluids are aqueous based liquids that have either been gelled or foamed. When the fluids are gelled, typically a polymeric gelling agent, such as a solvatable polysaccharide, e.g. guar and derivatized guar polysaccharides, is used. The thickened or gelled fluid helps keep the proppants within the fluid. Gelling can be accomplished or improved by the use of crosslinking agents or cross-linkers that promote crosslinking of the polymers together, thereby increasing the viscosity of the fluid. One of the more common cross-linked polymeric fluids is borate cross-linked guar.

Injection operations are considered a secondary method of hydrocarbon recovery and may be necessary when the primary recovery operation has left behind a substantial quantity of hydrocarbons in the subterranean formation. For example, in injection operations the energy for producing the remaining hydrocarbons from the subterranean formation may be supplied by the injection of fluids into the formation under pressure through one or more injection wells penetrating the formation, whereby the injection fluids drive the hydrocarbons to one or more producing wells penetrating the formation.

Suitable injection fluids include, among other things, water, steam, carbon dioxide, and natural gas. However, the sweep efficiency of injection operations may vary greatly depending on a number of factors, such as variability in the permeability of the formation. In particular, where the subterranean formation contains high permeability zones, the injection fluids may flow through the areas of least resistance, e.g., through the high permeability zones, thereby bypassing less permeable zones. While injection operations may provide the energy necessary to produce hydrocarbons from the high permeability zones, hydrocarbons contained within less permeable zones may not be driven to the one or more production wells penetrating the formation.

A variety of techniques have been attempted to improve the efficiency of injection operations. One such technique, known as "polymer flooding" comprises the addition of water-soluble polymers, such as polyacrylamide, to the injection fluid in order to increase the viscosity of the injection fluid to allow a better sweep efficiency by the injection fluid of the displacement of hydrocarbons through the formation. The viscosified injection fluid may be less likely to by-pass the hydrocarbons and push the remaining hydrocarbons out of the formation.

It would be desirable if an aqueous downhole fluid could obtain a pre-determined viscosity by using a reduced amount of polymers for viscosifying the fluid.

WO2012/071462 discloses aqueous fluids which are rendered viscous by the incorporation of a polymeric thickening material which is cross-linked by a cross-linking agent comprising supporting group structures bearing functional groups which react with the polymer molecules. The supporting structures in WO2012/071462 may be nanoparticles such as inorganic silica, alumina or metal nanoparticles and organic polymer nanoparticles.

WO2013/116227 discloses nanohybrid-stabilized emulsions for use downhole comprising a nanohybrid, water or an aqueous solution, and a water-immiscible liquid. The nanohybrids comprise a carbon nanotube and an inorganic second component, such as silica, alumina, magnesium oxide and titanium oxide. The fluids may further comprise nanoparticles such as SiO₂ nanoparticles.

Zolfaghari et al. in Journal of Applied Polymer Science, 2006, Vol. 100, No. 3, pages 2096-2103 discloses compositions for oil recovery applications comprising partially hydrolysed polyacrylamide, Na⁺-montmorillonite nanoclay and synthetic brine, which is an aqueous solution comprising CO₃H⁻, SO₄²⁻, Cl⁻, K⁺, Na⁺ Mg²⁺ and Ca²⁺ ions.

### SUMMARY

There is provided, in one form, an aqueous downhole fluid having polymers, and an effective amount of charged nanoparticles to crosslink at least a portion of the polymers. The polymers are selected from polyacrylamide, xanthan, guar, polyacrylic acid, poly 2-acrylamido-2-methyl-1-propane sulfonic acid (AMPS), polyethylene oxide, polypropylene oxide, or combinations thereof, and the polymers are homopolymers, copolymers, terpolymers, or combinations thereof. The polymers comprise at least one functional group grafted thereonto selected from the group consisting of polyacrylamide, polyacrylic acid, and combinations thereof. The charged nanoparticles are clay nanoparticles. The aqueous downhole fluid is selected from fracturing fluids, injection fluids, and combinations thereof. The effective amount of the charged nanoparticles in the aqueous downhole fluid ranges from 0.1 ppm to 5000 ppm.

In an alternative non-limiting embodiment of the fluid composition, the fluid composition may include an aqueous downhole fluid as defined in claim 1 comprising at least one grafted polymer where the grafted polymer(s) are present in the aqueous downhole fluid in an amount effective to decrease the amount of polymers necessary to obtain a pre-determined viscosity of the aqueous downhole fluid as compared to an otherwise identical aqueous downhole fluid absent the functional group(s). The grafted polymer(s) are selected from polyacrylamide, xanthan gum, guar gum, polyacrylic acid, poly 2-acrylamido-2-methyl-1-propane sulfonic acid (AMPS), polyethylene oxide, polypropylene oxide, and combinations thereof. The polymers are homopolymers, copolymers, terpolymers, or combinations thereof. The grafted polymer(s) have at least one functional group grafted thereonto selected from the group consisting of polyacrylamide, polyacrylic acid, and combinations thereof.

There is provided in another form, a method that includes circulating an aqueous downhole fluid as defined in claim 4 into a subterranean reservoir. The aqueous downhole fluid includes at least one polymer, selected from polyacrylamide, xanthan gum, guar gum, polyacrylic acid, poly 2-acrylamido-2-methyl-1-propane sulfonic acid (AMPS), polyethylene oxide, polypropylene oxide, and combinations thereof. The polymers are homopolymers, copolymers, terpolymers, or combinations thereof. The at least one polymer comprises at least one functional group grafted thereonto selected from the group consisting of polyacrylamide, polyacrylic acid, and combinations thereof. The charged nanoparticles are clay nanoparticles. The aqueous downhole fluid is selected from fracturing fluids, injection fluids, and combinations thereof. The charged nanoparticles are present in the aqueous downhole fluid in an amount effective to decrease the amount of the polymer(s) necessary to obtain a pre-determined viscosity of the aqueous downhole fluid as compared to an otherwise identical aqueous downhole fluid absent the charged nanoparticles. The amount of the charged nanoparticles within the aqueous downhole fluid ranges from 0.1 ppm to 5000 ppm.

In the method of the invention, the polymer(s) have at least one functional group grafted thereonto to form grafted polymers. The functional group is selected from polyacrylamide, polyacrylic acid, and combinations thereof.

The charged nanoparticles and/or the grafted polymers within the aqueous downhole fluid appear to crosslink at least a portion of the polymers within the fluid, as well as reduce the amount of polymers required to obtain a pre-determined viscosity of the aqueous downhole fluid as compared to an identical aqueous downhole fluid absent the charged nanoparticles.

### DETAILED DESCRIPTION

It has been discovered that an effective amount of charged clay nanoparticles ranging from 0.1 ppm to 5000 ppm within an aqueous downhole fluid may crosslink at least a portion of the polymers within the aqueous downhole fluid. Although the inventors do not wish to be limited to a particular theory, it is believed that the crosslinking may occur by coulombic attraction, e.g. ionic bonding, or depletion flocculation (destabilisation of colloidal dispersions by free, non-adsorbing polymer molecules in solution), which also allows the cross-linking to be reversible. The cross-linking may be thermally reversible. The viscosity may increase with an increase in temperature, and then the viscosity may decrease with a decrease in temperature. Likewise, cross-linking is reversible, and the cross-linking may increase with an increase in temperature, and then the cross-linking may decrease with a decrease in temperature. The viscosity 'peaks' as the temperature steadily increases and then returns to normal as the temperature decreases. The viscosity may be increased and decreased many times depending on the temperature. This type of polymer may be referred to as a 'smart' polymer in a non-limiting embodiment because the viscosity may vary depending on the temperature, as previously mentioned.

Moreover, the use of the charged nanoparticles may reduce the amount of polymers required to obtain a pre-determined viscosity of the aqueous downhole fluid as compared to an identical aqueous downhole fluid absent the charged nanoparticles. 'Charged nanoparticles' are defined herein to be nanoparticles having a coulombic attraction to the polymers within the downhole aqueous fluid where the charge may be increased or decreased as needed depending on the type and/or use of the polymers.

Complete cross-linking of the polymers by the charged nanoparticles is desirable, but it should be appreciated that complete cross-linking is not necessary for the methods and compositions herein to be considered effective. Success is obtained if more polymers are cross-linked using the charged nanoparticles than in the absence of the charged nanoparticles. Alternatively, the method described is considered successful if a majority of the polymers are cross-linked by the charged nanoparticles, or from about 70 wt% independently to about 99 wt% of the polymers in another non-limiting embodiment.

The charged nanoparticles are present in the aqueous downhole fluid in an effective amount to crosslink at least a portion of the polymers therein. The amount of the charged nanoparticles within the aqueous downhole fluid is from 0.1 ppm to 5000 ppm, preferably from 0.1 ppm independently to about 1000 ppm, or from about 1 ppm independently to about 300 ppm in another non-limiting embodiment. As used herein with respect to a range, "independently" means that any lower threshold may be used together with any upper threshold to give a suitable alternative range.

The charged nanoparticles are clay nanoparticles. The clay nanoparticles may be or include, but are not limited to, laponite, bentonite, and combinations thereof. Laponite nanoparticles are highly charged synthetic clay nanoparticles, and the chemistry is similar to micron-sized bentonite. However, the larger size of the bentonite makes it difficult to use for cross-linking the polymers within the aqueous downhole fluids as compared to the clay nanoparticles described herein.

The charged nanoparticles may have at least one dimension no greater than about 1000 nm. Alternatively, the average particle size of the charged nanoparticle is less than or equal to 999 nm, or alternatively the average particle size may range from about 1 nm independently to about 500 nm. In another non-limiting embodiment, the charged nanoparticles may have a disk shape where the width of the disk ranges from about 0.5 nm independently to about 5 nm, alternatively from about 1 nm independently to about 3 nm. The diameter of the disk may range from about 15 nm independently to about 35 nm, or from about 20 nm independently to about 30 nm in another non-limiting embodiment.

While materials on a micron scale have properties similar to the larger materials from which they are derived, assuming homogeneous composition, the same is not true of nanoparticles. An immediate example is the very large interfacial or surface area per volume for nanoparticles. The consequence of this phenomenon is a very large potential for interaction with other matter, as a function of volume. For nanoparticles, the surface area may be up to 1800 m²/g. Additionally, because of the very large surface area to volume present with charged nanoparticles, it is expected that in most, if not all cases, much less proportion of charged nanoparticles need be employed relative to micron-sized additives conventionally used to achieve or accomplish a similar effect.

Nevertheless, it should be understood that surface-modified nanoparticles may find utility in the compositions and methods herein. "Surface-modification" is defined here as the process of altering or modifying the surface properties of a particle by any means, including but not limited to physical, chemical, electrochemical or mechanical means, and with the intent to provide a unique desirable property or combination of properties to the surface of the nanoparticle, which differs from the properties of the surface of the unprocessed nanoparticle.

The nanoparticles may be functionally modified to introduce chemical functional groups thereon. Functionalized nanoparticles are defined herein as those which have had their edges or surfaces modified to contain at least one functional group including, but not necessarily limited to, sulfonate, sulfate, sulfosuccinate, thiosulfate, succinate, carboxylate, hydroxyl, glucoside, ethoxylate, propoxylate, phosphate, ethoxylate, ether, amines, amides, ethoxylate-propoxylate, an alkyl, an alkenyl, a phenyl, a benzyl, a perfluoro, thiol, an ester, an epoxy, a keto, a lactone, a metal, an organo-metallic group, an oligomer, a polymer, or combinations thereof.

Exemplary methods of functionalizing may include, but are not limited to, reactions such as oxidation or oxidative cleavage of polymers to form alcohols, diols, or carbonyl groups including aldehydes, ketones, or carboxylic acids; diazotization of polymers proceeding by the Sandmeyer reaction; intercalation/metallization of a nanodiamond by treatment with a reactive metal such as an alkali metal including lithium, sodium, potassium, and the like, to form an anionic intermediate, followed by treatment with a molecule capable of reacting with the metalized nanodiamond such as a carbonyl-containing species (carbon dioxide, carboxylic acids, anhydrides, esters, amides, imides, etc.), an alkyl species having a leaving group such as a halide (Cl, Br, I), a tosylate, a mesylate, or other reactive esters such as alkyl halides, alkyl tosylates, etc.; molecules having benzylic functional groups; use of transmetalated species with boron, zinc, or tin groups which react with e.g., aromatic halides in the presence of catalysts such as palladium, copper, or nickel, which proceed via mechanisms such as that of a Suzuki coupling reaction or the Stille reaction, and combinations thereof.

It will be appreciated that the above methods are intended to illustrate the concept of introducing functional groups to a nanoparticle, and should not be considered as limiting to such methods.

Prior to functionalization the nanoparticle may be exfoliated. Exemplary exfoliation methods include, but are not necessarily limited to, those practiced in the art such as fluorination, acid intercalation, acid intercalation followed by thermal shock treatment, and the like.

Covalent functionalization may include, but is not necessarily limited to, oxidation and subsequent chemical modification of oxidized nanoparticles, fluorination, free radical additions, addition of carbenes, nitrenes and other radicals, arylamine attachment via diazonium chemistry, and the like. Besides covalent functionalization, chemical functionality may be introduced by noncovalent functionalization, electrostatic interactions, π-π interactions and polymer interactions, such as wrapping a nanoparticle with a polymer, direct attachment of reactants to nanoparticles by attacking the sp² bonds, direct attachment to ends of nanoparticles or to the edges of the nanoparticles, and the like.

In an alternative non-limiting embodiment, an aqueous downhole fluid composition may include an aqueous downhole fluid and at least one grafted polymer where the grafted polymer(s) are present in the aqueous downhole fluid in an amount effective to decrease the amount of polymers necessary to obtain a pre-determined viscosity of the aqueous downhole fluid as compared to an otherwise identical aqueous downhole fluid having the polymer but absent the functional group grafted thereonto. The grafted polymer(s) have at least one functional group grafted thereonto selected from the group consisting of polyacrylamide, polyacrylic acid, and combinations thereof. 'Grafted polymer' is defined herein to be a polymer, such as that described herein, having a functional group grafted thereonto.

In a non-limiting embodiment, the functional group grafted onto the polymers may increase the oil solubility of the charged nanoparticles and/or the polymers. Alternatively, the functional group grafted onto the polymer(s) may decrease the amount of polymer needed and/or the amount of charged nanoparticles needed as compared to the aqueous downhole fluid absent the functional group(s) grafted onto the polymer(s). Also, the functional group(s) grafted onto the polymer(s) may enhance the polymer's solubility in salt solutions.

Related to fracturing fluids, the amount of polymers within the aqueous downhole fluid for subsequent formation of a gelled aqueous fluid depends on at least two factors. One involves generating enough viscosity to control the rate of fluid leak off into the pores of the fracture, and the second involves creating a viscosity high enough to keep the proppant particles suspended therein during the fluid injecting step, in the non-limiting case of a fracturing fluid. Thus, depending on the application, the polymers are added to the aqueous fracturing fluid in concentrations ranging from about 0.5% independently to about 25% by volume, alternatively up to about 12 vol % of the total gelled aqueous fluid (from about 5 gptg (gallons per thousand gallons) independently to about 120 gptg or from about 5 liters per thousand liters independently to about 120 liters per thousand liters). In another non-limiting embodiment, the range for polymers within the gelled aqueous fluid may be from about 1.0% independently to about 10.0% by volume polymers. In an alternate embodiment, the amount of polymers ranges from about 2% independently to about 6% by volume. One skilled in the art would understand what specific amount of charged nanoparticles that may be needed depending on the type of aqueous downhole fluid and use of the fluid, type of formation, etc. The charged nanoparticles are present in an amount from 0.1 ppm to 5000 ppm.

The aqueous downhole fluid may include water, salt water, brine, produced water, or seawater. The salt water may be water containing one or more salts dissolved therein. Other types of aqueous downhole fluids may include oil-in-water emulsions, oil-in-brine emulsions, and combinations thereof. The temperature of the aqueous downhole fluid may range from about 60°F (about 15°C) independently to about 300°F (about 150°C) and still maintain the viscosity of the aqueous downhole fluid, alternatively from about 75°F (about 23°C) independently to about 175°F (about 80°C).

In one non-limiting embodiment of the invention, it is desirable that the cross-linking of the polymers within the aqueous downhole fluid be uniform, which requires the distribution of the charged nanoparticles to be uniform. If the charged nanoparticles flocculate, drop out, or precipitate, the crosslinking of the polymers within the aqueous downhole fluid may change.

Any suitable mixing apparatus may be used to incorporate the charged nanoparticles into an aqueous downhole fluid. In the case of batch mixing, the polymers and the aqueous downhole fluid are blended for a period of time sufficient to form a gelled or viscosified solution. The gelled aqueous downhole fluid may be prepared by blending the polymers into the aqueous downhole fluid before, during, or after the charged nanoparticles have been added.

In some cases, the nanoparticles may change the properties of the aqueous downhole fluids in which they reside, based on various stimuli including, but not necessarily limited to, temperature, pressure, rheology, pH, chemical composition, salinity, and the like. This is due to the fact that the charged nanoparticles can be custom designed on an atomic level to have very specific functional groups, and thus the charged nanoparticles react to a change in surroundings or conditions in a way that is beneficial. It should be understood that it is expected that the charged nanoparticles may have more than one type of functional group, making them multifunctional. Multifunctional nanoparticles may be useful for simultaneous applications, such as but not limited to, increasing the temperature stability of the aqueous downhole fluid, while also cross-linking at least a portion of the polymers therein.

The effective amount of the polymers within the aqueous downhole fluid may range from 10 ppm independently to 10000 ppm, alternatively from about 5 ppm independently to about 5000 ppm. The viscosity of the aqueous downhole fluid may be up to about 600 cP depending on the use of the aqueous downhole fluid. In one non-limiting embodiment, the viscosity may range from about 10 independently to about 30 cP. The polymers are selected from polyacrylamide, xanthan, guar, polyacrylic acid, poly 2-acrylamido-2-methyl-1-propane sulfonic acid (AMPS), polyethylene oxide, polypropylene oxide, and combinations thereof; and the polymers are homopolymers, copolymers, terpolymers, and combinations thereof. One non-limiting example of the polymers may be or include the PLURONICS™ from BASF (The Chemical Company), which is ethylene oxide, propylene oxide, ethylene oxide as a tri block copolymer. The polymers comprise at least one functional group grafted thereonto selected from the group consisting of polyacrylamide, polyacrylic acid, and combinations thereof.

The use of surfactants together with the nanoparticles may form self-assembly structures that may enhance the thermodynamic, physical, and rheological properties of these types of fluids. The use of surfactants is optional. It may be helpful in designing new fluids containing engineered nanoparticles to match the amount of the nanoparticles with the proper surfactant/aqueous downhole fluid ratio to achieve the desired dispersion for the particular aqueous downhole fluid. Such surfactants may be present in the aqueous downhole fluid fluids in amounts from about 0.01 wt% independently to about 15 wt%, alternatively from about 0.01 wt% independently to about 5 wt%.

Ways of dispersing colloidal-size particles in fluids is known, but how to disperse nanoparticles within the aqueous downhole fluids may be a challenge. Expected suitable surfactants may include, but are not necessarily limited to non-ionic, anionic, cationic, amphoteric surfactants and zwitterionic surfactants, janus surfactants, and blends thereof. Suitable nonionic surfactants may include, but are not necessarily limited to, alkyl polyglycosides, sorbitan esters, methyl glucoside esters, amine ethoxylates, diamine ethoxylates, polyglycerol esters, alkyl ethoxylates, alcohols that have been polypropoxylated and/or polyethoxylated or both. Suitable anionic surfactants may include alkali metal alkyl sulfates, alkyl ether sulfonates, alkyl sulfonates, alkyl aryl sulfonates, linear and branched alkyl ether sulfates and sulfonates, alcohol polypropoxylated sulfates, alcohol polyethoxylated sulfates, alcohol polypropoxylated polyethoxylated sulfates, alkyl disulfonates, alkylaryl disulfonates, alkyl disulfates, alkyl sulfosuccinates, alkyl ether sulfates, linear and branched ether sulfates, alkali metal carboxylates, fatty acid carboxylates, and phosphate esters. Suitable cationic surfactants may include, but are not necessarily limited to, arginine methyl esters, alkanolamines and alkylenediamides. Suitable surfactants may also include surfactants containing a non-ionic spacer-arm central extension and an ionic or nonionic polar group. Other suitable surfactants may be dimeric or gemini surfactants, cleavable surfactants, janus surfactants, and extended surfactants also called extended chain surfactants.

Sufficient volumes of the aqueous downhole fluid may be injected into the subterranean formation for fracturing the formation and/or for an injection operation. The volume of the aqueous downhole fluids to inject into the formation will be based, inter alia, on several properties of the zone to be treated, such as depth and volume of the zone, as well as the permeability and other physical properties of the material in the zone. One of ordinary skill in the art would understand what the proper volume of the aqueous downhole fluid would be needed depending on the type of fluid used for a specific application, e.g. fracturing or injection operation.

In the foregoing specification, the invention has been described with reference to specific embodiments thereof, and has been described as effective in providing methods and compositions for reducing the amount of polymers within an aqueous downhole fluid. However, it will be evident that various modifications and changes can be made thereto without departing from the broader scope of the invention as set forth in the appended claims. Accordingly, the specification is to be regarded in an illustrative rather than a restrictive sense. For example, specific aqueous downhole fluids, charged nanoparticles, polymers, and modifications falling within the claimed parameters, but not specifically identified or tried in a particular composition or method, are expected to be within the scope of this invention.

The present invention may suitably comprise, consist or consist essentially of the elements disclosed and may be practiced in the absence of an element not disclosed. For instance, the fluids and methods may consist of or consist essentially of fluids and methods for reducing the amount of polymers within an aqueous downhole fluid by adding charged clay nanoparticles in an effective amount of from 1 ppm to 5000 ppm to the aqueous downhole fluid comprising polymers selected from polyacrylamide, xanthan, guar, polyacrylic acid, poly 2-acrylamido-2-methyl-1-propane sulfonic acid (AMPS), polyethylene oxide, polypropylene oxide, and combinations thereof, which are homopolymers, copolymers, terpolymers and combinations thereof and comprise at least one functional group grafted thereonto selected from the group consisting of polyacrylamide, polyacrylic acid, and combinations thereof, where at least a portion of the polymers are cross-linked by the charged nanoparticles, and the aqueous downhole fluid is a fracturing fluid, an injection fluid, and combinations thereof. An effective amount (1 ppm to 5000 ppm) of charged nanoparticles reduces the amount of polymers necessary to obtain a pre-determined viscosity of the aqueous downhole fluid as compared to the amount of polymers necessary to obtain the same pre-determined viscosity of an otherwise identical aqueous downhole fluid absent the charged nanoparticles.

The words "comprising" and "comprises" as used throughout the claims, are to be interpreted to mean "including but not limited to" and "includes but not limited to", respectively.

## Claims

1. A fluid composition comprising:
an aqueous downhole fluid selected from the group consisting of fracturing fluids, injection fluids, and combinations thereof;
at least one polymer selected from the group consisting of polyacrylamide, xanthan gum, guar gum, polyacrylic acid, poly 2-acrylamido-2-methyl-1-propane sulfonic acid (AMPS), polyethylene oxide, polypropylene oxide, and combinations thereof; wherein the polymers are selected from the group consisting of homopolymers, copolymers, terpolymers, and combinations thereof; and wherein the at least one polymer comprises at least one functional group grafted thereonto selected from the group consisting of polyacrylamide, polyacrylic acid, and combinations thereof;
charged nanoparticles in an amount effective to crosslink at least a portion of the polymers, where the charged nanoparticles are selected from the group consisting of clay nanoparticles and wherein the effective amount of the charged nanoparticles within the aqueous downhole fluid ranges from 0.1 ppm to 5000 ppm.

2. The fluid composition of claim 1,
wherein the clay nanoparticles are selected from the group consisting of laponite, bentonite, and combinations thereof.

3. The fluid composition of claim 1 or 2,
wherein the effective amount of the at least one polymer within the aqueous downhole fluid ranges from 10 ppm to 10000 ppm.

4. A method comprising:
circulating an aqueous downhole fluid into a subterranean reservoir, wherein the aqueous downhole fluid comprises at least one polymer selected from the group consisting of polyacrylamide, xanthan gum, guar gum, polyacrylic acid, poly 2-acrylamido-2-methyl-1-propane sulfonic acid (AMPS), polyethylene oxide, polypropylene oxide, and combinations thereof; wherein the polymers are selected from the group consisting of homopolymers, copolymers, terpolymers, and combinations thereof; wherein the at least one polymer comprises at least one functional group grafted thereonto selected from the group consisting of polyacrylamide, polyacrylic acid, and combinations thereof; wherein the charged nanoparticles are selected from the group consisting of clay nanoparticles, and wherein the aqueous downhole fluid is selected from the group consisting of fracturing fluids, injection fluids, and combinations thereof; and
wherein the charged nanoparticles are present in the aqueous downhole fluid in an amount effective to decrease the amount of the at least one polymer necessary to obtain a pre-determined viscosity of the aqueous downhole fluid as compared to an otherwise identical aqueous downhole fluid absent the charged nanoparticles, and wherein the amount of the charged nanoparticles within the aqueous downhole fluid ranges from 0.1 ppm to 5000 ppm.

5. The method of claim 4,
wherein the clay nanoparticles are selected from the group consisting of laponite, bentonite, and combinations thereof.

6. The method of any one of claims 4 or 5,
wherein the charged nanoparticles have an average particle size equal to or less than 999 nm.

7. The method of any one of claims 4 or 5,
wherein the amount of the polymers within the aqueous downhole fluid ranges from 10 ppm to 10000 ppm.

## Patentansprüche

1. Flüssigkeitszusammensetzung, umfassend:
eine wässrige Bohrlochfüssigkeit, ausgewählt aus der Gruppe bestehend aus Frakturierungsflüssigkeiten, Injektionsflüssigkeiten und Kombinationen davon;
mindestens ein Polymer, ausgewählt aus der Gruppe bestehend aus Polyacrylamid, Xanthangummi, Guargummi, Polyacrylsäure, Poly-2-acrylamido-2-methyl-1-propansulfonsäure (AMPS), Polyethylenoxid, Polypropylenoxid und Kombinationen davon; wobei die Polymere ausgewählt sind aus der Gruppe bestehend aus Homopolymeren, Copolymeren, Terpolymeren und Kombinationen davon; und wobei das mindestens eine Polymer mindestens eine funktionelle Gruppe umfasst, die darauf gepfropft ist, ausgewählt aus der Gruppe bestehend aus Polyacrylamid, Polyacrylsäure und Kombinationen davon;
geladene Nanopartikel in einer Menge, die wirksam ist, um mindestens einen Teil der Polymere zu vernetzen, wobei die geladenen Nanopartikel ausgewählt sind aus der Gruppe bestehend aus Ton-Nanopartikeln, und wobei die wirksame Menge der geladenen Nanopartikel in der wässrigen Bohrlochflüssigkeit im Bereich von 0,1 ppm bis 5000 ppm liegt.

2. Flüssigkeitszusammensetzung nach Anspruch 1,
wobei die Ton-Nanopartikel ausgewählt sind aus der Gruppe bestehend aus Laponit, Bentonit und Kombinationen davon.

3. Flüssigkeitszusammensetzung nach Anspruch 1 oder 2,
wobei die wirksame Menge des mindestens einen Polymers in der wässrigen Bohrlochflüssigkeit im Bereich von 10 ppm bis 10000 ppm liegt.

4. Verfahren, umfassend:
Zirkulieren einer wässrigen Bohrlochflüssigkeit in einer unterirdischen Lagerstätte, wobei die wässrige Bohrlochflüssigkeit mindestens ein Polymer umfasst, ausgewählt aus der Gruppe bestehend aus Polyacrylamid, Xanthangummi, Guargummi, Polyacrylsäure, Poly-2-acrylamido-2-methyl-1-propansulfonsäure (AMPS), Polyethylenoxid, Polypropylenoxid und Kombinationen davon; wobei die Polymere ausgewählt sind aus der Gruppe bestehend aus Homopolymeren, Copolymeren, Terpolymeren und Kombinationen davon; wobei das mindestens eine Polymer mindestens eine funktionelle Gruppe umfasst, die darauf gepfropft ist, ausgewählt aus der Gruppe bestehend aus Polyacrylamid, Polyacrylsäure und Kombinationen davon; wobei die geladenen Nanopartikel ausgewählt sind aus der Gruppe bestehend aus Ton-Nanopartikeln, und wobei die wässrige Bohrlochflüssigkeit ausgewählt ist aus der Gruppe bestehend aus Frakturierungsflüssigkeiten, Injektionsflüssigkeiten und Kombinationen davon; und
wobei die geladenen Nanopartikel in der wässrigen Bohrlochflüssigkeit in einer Menge vorliegen, die wirksam ist, um die Menge des mindestens einen Polymers zu verringern, die notwendig ist, um eine vorgegebene Viskosität der wässrigen Bohrlochflüssigkeit im Vergleich zu einer ansonsten identischen wässrigen Bohrlochflüssigkeit ohne die geladenen Nanopartikel zu erzielen, und wobei die Menge der geladenen Nanopartikel in der wässrigen Bohrlochflüssigkeit im Bereich von 0,1 ppm bis 5000 ppm liegt.

5. Verfahren nach Anspruch 4,
wobei die Ton-Nanopartikel ausgewählt sind aus der Gruppe bestehend aus Laponit, Bentonit und Kombinationen davon.

6. Verfahren nach einem der Ansprüche 4 oder 5,
wobei die geladenen Nanopartikel eine mittlere Partikelgröße gleich oder kleiner als 999 nm aufweisen.

7. Verfahren nach einem der Ansprüche 4 oder 5, wobei die Menge der Polymere in der wässrigen Bohrlochflüssigkeit im Bereich von 10 ppm bis 10000 ppm liegt.

## Revendications

1. Composition fluide comprenant :
un fluide aqueux de fond de trou choisi parmi le groupe constitué par les fluides de fracturation, les fluides d'injection et leurs combinaisons ;
au moins un polymère choisi parmi le groupe constitué par le polyacrylamide, la gomme de xanthane, la gomme de guar, l'acide polyacrylique, le polyacide 2-acrylamido-2-méthyl-1-propane sulfonique (AMPS), l'oxyde de polyéthylène, l'oxyde de polypropylène et leurs combinaisons ; dans laquelle les polymères sont choisis parmi le groupe constitué par les homopolymères, copolymères, terpolymères, et leurs combinaisons ; et dans laquelle l'au moins un polymère comprend au moins un groupe fonctionnel greffé sur celui-ci choisi parmi le groupe constitué par le polyacrylamide, l'acide polyacrylique et leurs combinaisons ;
des nanoparticules chargées en une quantité efficace pour réticuler au moins une partie des polymères, dans laquelle les nanoparticules chargées sont choisies parmi le groupe constitué par les nanoparticules d'argile et dans laquelle la quantité efficace des nanoparticules chargées dans le fluide aqueux de fond de trou va de 0,1 ppm à 5 000 ppm.

2. Composition fluide selon la revendication 1,
dans laquelle les nanoparticules d'argile sont choisies parmi le groupe constitué par la laponite, la bentonite et leurs combinaisons.

3. Composition fluide selon la revendication 1 ou 2,
dans laquelle la quantité efficace de l'au moins un polymère dans le fluide aqueux de fond de trou va de 10 ppm à 10 000 ppm.

4. Procédé comprenant :
la circulation d'un fluide aqueux de fond de trou dans un réservoir souterrain, dans lequel le fluide aqueux de fond de trou comprend au moins un polymère choisi parmi le groupe constitué par le polyacrylamide, la gomme de xanthane, la gomme de guar, l'acide polyacrylique, le polyacide 2-acrylamido-2-méthyl-1-propane sulfonique (AMPS), l'oxyde de polyéthylène, l'oxyde de polypropylène et leurs combinaisons ; dans lequel les polymères sont choisis parmi le groupe constitué par les homopolymères, copolymères, terpolymères, et leurs combinaisons ; dans lequel l'au moins un polymère comprend au moins un groupe fonctionnel greffé sur celui-ci choisi parmi le groupe constitué par le polyacrylamide, l'acide polyacrylique et leurs combinaisons ; dans lequel les nanoparticules chargées sont choisies parmi le groupe constitué par les nanoparticules d'argile, et dans lequel le fluide aqueux de fond de trou est choisi parmi le groupe constitué par des fluides de fracturation, des fluides d'injection, et leurs combinaisons ; et
dans lequel les nanoparticules chargées sont présentes dans le fluide aqueux de fond de trou en une quantité efficace pour diminuer la quantité de l'au moins un polymère nécessaire pour obtenir une viscosité prédéterminée du fluide aqueux de fond de trou par comparaison avec un fluide aqueux de fond de trou autrement identique sans nanoparticules chargées, et dans lequel la quantité des nanoparticules chargées dans le fluide aqueux de fond de trou va de 0,1 ppm à 5 000 ppm.

5. Procédé selon la revendication 4,
dans lequel les nanoparticules d'argile sont choisies parmi le groupe constitué par la laponite, la bentonite et leurs combinaisons.

6. Procédé selon l'une quelconque des revendications 4 ou 5,
dans lequel les nanoparticules chargées ont une taille moyenne de particule égale à ou inférieure à 999 nm.

7. Procédé selon l'une quelconque des revendications 4 ou 5, dans lequel la quantité des polymères dans le fluide aqueux de fond de trou va de 10 ppm à 10 000 ppm.
